# EUROPEAN PATENT APPLICATION

(11) **EP 2 669 674 A1**
(43) Date of publication of application: **04.12.2013**
(21) Application number: 13169249.3
(22) Date of filing: 24.05.2013
(51) Int. Cl.: G01N 30/26, B01D 15/16, B01D 19/00, G01N 30/20

(54) **Liquid chromatography apparatus, liquid chromatography analysis method, and liquid chromatography analysis program**

(30) Priority: 30.05.2012 JP 2012123448; 06.03.2013 JP 2013044386
(71) Applicant: Arkray, Inc., Kyoto-shi, Kyoto 601-8045 (JP)
(72) Inventor: Satake, Seiji, Kyoto-shi, Kyoto 602-0008 (JP); Kasai, Tokuo, Kyoto-shi, Kyoto 602-0008 (JP)
(74) Representative: Piésold, Alexander James

(57) **Abstract**

A liquid chromatography apparatus having: a column (60) that adsorbs analysis components within a specimen; a plunger pump (63) that feeds eluent A, that elutes the analysis components adsorbed at the column (60), in an amount greater than or equal to an amount needed for analysis of one specimen from a cylinder portion by a one-time pushing operation of a rod; a photometric unit (7) that analyzes analysis components eluted by eluent A; an eluent loop (42) that holds eluent B; a liquid feeding flow path that communicates the plunger pump (63) and the column (60); and a first switching valve (41) that switches the liquid feeding flow path to either of a first flow path, that causes eluent A to flow from the plunger pump (63) to the column (60), and a second flow path, that causes eluent A to flow from the plunger pump (63) through the first eluent holding loop (42) to the column (60), is provided.

## Description

### BACKGROUND

### Technical Field

The present invention relates to a liquid chromatography apparatus, a liquid chromatography analysis method and a liquid chromatography analysis program, and in particular, relates to a liquid chromatography apparatus, a liquid chromatography analysis method and a liquid chromatography analysis program that are used in analyzing a biological sample such as blood or the like.

### Related Art

As an analyzing device that analyzes components within a specimen, there is known a liquid chromatography apparatus that adsorbs components within a specimen by an adsorbing portion such as a column or the like, and feeds an eluent to the adsorbing portion and desorbs specific components, and thereafter, analyzes the components within the eluent at a measuring means (e.g., Japanese Patent Application Laid-Open (JP-A) No. 2007-212277).

Further, there is also a liquid chromatography apparatus having a constant rate pump that feeds one eluent, and an introduction flow path that introduces another eluent, and that has a first flow path switching valve that enables introduction of the one eluent into this introduction flow path, wherein the constant rate pump feeds two or more types of eluents in a non-mixed state to an adsorbing portion via the first flow path switching valve (WO 2010/041637).

### SUMMARY OF THE INVENTION

However, in conventional liquid chromatography apparatus, a constant rate pump strokes many times during the analysis of one specimen, and therefore, at the time of liquid feeding, pulsation occurs in the eluent. Accordingly, a damper must be provided at the downstream side of the constant rate pump in order to keep the pressure and the flow rate of the eluent, that is supplied to the adsorbing portion and is measured by the measuring means, constant.

At least the preferred aspects of the present invention provide a liquid chromatography apparatus that suppresses pulsation of an eluent that is fed during the analysis of one specimen, and a liquid chromatography analysis method that uses the liquid chromatography apparatus, and a liquid chromatography analysis program for use in the liquid chromatography apparatus.

An invention of a first aspect relates to a liquid chromatography apparatus, and has: an adsorbing portion that adsorbs analysis components within a specimen; a liquid feeding device that feeds a first eluent, that elutes analysis components adsorbed at the adsorbing portion, in an amount greater than or equal to an amount needed for analysis of one specimen from a cylinder portion by a one-time pushing operation of a rod; a liquid feeding flow path that communicates the liquid feeding device and the adsorbing portion; and an analyzing unit for analyzing analysis components eluted by the first eluent.

In the above-described liquid chromatography apparatus, at the liquid feeding device, the first eluent, in an amount that is greater than or equal to the amount needed for analysis of one specimen, is fed from the cylinder portion by the pushing operation of one time, and therefore, there is no need to repeatedly carry out the pushing operation during the analysis of one specimen. Accordingly, the occurrence of pulsation, that accompanies repeating of the pushing and pulling operations, can be effectively suppressed. Therefore, a damper for suppressing pulsation can be omitted, and costs are reduced. Further, because the eluent flows through the liquid feeding flow path at a constant pressure and flow rate, deterioration in accuracy that accompanies fluctuations in pressure and flow rate of the eluent is suppressed at the analyzing unit.

In a liquid chromatography apparatus of a second aspect, the apparatus of the first aspect further has: a first holding flow path that holds a second eluent that is different than the first eluent; and a first switching unit for switching the liquid feeding flow path to either of a first flow path, that causes the first eluent to flow from the liquid feeding device to the adsorbing portion, and a second flow path, that causes the first eluent to flow from the liquid feeding device through the first holding flow path to the adsorbing portion.

In the above-described liquid chromatography apparatus, due to the liquid feeding flow path being switched from the first flow path to the second flow path by the first switching unit, the second eluent, that was held in the first holding flow path, is pushed-out toward the adsorbing portion by the first eluent that has flowed-in into the first holding flow path.

Here, by making the liquid feeding flow path and the first holding flow path be flow paths that are narrow to the extent that mixing-together of eluents does not occur, the second eluent that has been pushed-out from the first holding flow path is fed to the adsorbing portion in a state of not being mixed together with the first eluent.

In a liquid chromatography apparatus of a third aspect, the apparatus of the second aspect further has: a second holding flow path that holds a third eluent that is different than the first and second eluents; and a second switching unit for switching the liquid feeding flow path to either of the first flow path, and a third flow path that causes the first eluent to flow from the liquid feeding device through the second holding flow path to the adsorbing portion.

In the above-described liquid chromatography apparatus, due to the liquid feeding flow path being switched from the first flow path to the third flow path by the second switching unit, the third eluent, that was held in the second holding flow path, is pushed-out toward the adsorbing portion by the first eluent that has flowed-in into the second holding flow path.

Here, by making the liquid feeding flow path and the second holding flow path be flow paths that are narrow to the extent that mixing-together of eluents does not occur, the third eluent that has been pushed-out from the second holding flow path is fed to the adsorbing portion in a state of not being mixed together with the first eluent.

In a liquid chromatography apparatus of a fourth aspect, the apparatus of any one of the first through third aspects further has: a specimen holding flow path that holds a specimen; and a third switching unit for switching the liquid feeding flow path to either of the first flow path, that causes the first eluent to flow from the liquid feeding device to the adsorbing portion, and a fourth flow path that causes the first eluent to flow from the liquid feeding device through the specimen holding flow path to the adsorbing portion.

In the above-described liquid chromatography apparatus, due to the liquid feeding flow path being switched from the first flow path to the fourth flow path by the third switching unit, the specimen that was held in the specimen holding flow path is pushed-out toward the adsorbing portion by the first eluent that has flowed-in into the specimen holding flow path.

Here, by making the liquid feeding flow path and the specimen holding flow path be flow paths that are narrow to the extent that mixing-together of eluents does not occur, the specimen that has been pushed-out from the specimen holding flow path is fed to the adsorbing portion in a state of not being mixed together with the first eluent, and analysis components within the specimen are adsorbed at the adsorbing portion.

An invention of a fifth aspect relates to a liquid chromatography analysis method, and has: an eluting step of, at a liquid feeding device having a cylinder portion and a rod, feeding, to an adsorbing portion that adsorbs analysis components in a specimen, a first eluent that elutes the analysis components, in an amount greater than or equal to an amount needed for analysis of one specimen from the cylinder portion by a one-time pushing operation of the rod, and eluting the analysis components; and an analyzing step of analyzing, at an analyzing unit, the analysis components eluted in the eluting step.

In the above-described liquid chromatography analysis method, in the eluting step, the first eluent, in an amount that is greater than or equal to the amount needed for analysis of one specimen, is fed from the cylinder portion by the pushing operation of one time, and therefore, there is no need to repeatedly carry out the pushing operation during the analysis of one specimen. Accordingly, the occurrence of pulsation, that accompanies repeating of the pushing and pulling operations, can be effectively suppressed. Therefore, a damper for suppressing pulsation can be omitted, and costs are reduced. Further, because the eluent flows through the liquid feeding flow path at a constant pressure and flow rate, deterioration in accuracy that accompanies fluctuations in pressure and flow rate of the eluent is suppressed in the analyzing step.

In a liquid chromatography analysis method of a sixth aspect, the method of the fifth aspect has a first eluent holding step of holding, in a first holding flow path, a second eluent that is different than the first eluent, wherein the eluting step has a first flow path switching step in which a liquid feeding flow path, that communicates the liquid feeding device and the adsorbing portion, is switched from a first flow path, that causes the first eluent to flow from the liquid feeding device to the adsorbing portion, to a second flow path, that causes the first eluent to flow from the liquid feeding device to the adsorbing portion via the first holding flow path in which the second eluent is held in the first eluent holding step.

In the above-described liquid chromatography analysis method, due to the liquid feeding flow path being switched from the first flow path to the second flow path in the first flow path switching step, the second eluent that was held in the first holding flow path is pushed-out toward the adsorbing portion by the first eluent that has flowed-in into the first holding flow path.

Here, by making the liquid feeding flow path and the first holding flow path be flow paths that are narrow to the extent that mixing-together of eluents does not occur, the second eluent that has been pushed-out from the first holding flow path is fed to the adsorbing portion in a state of not being mixed together with the first eluent.

In a liquid chromatography analysis method of a seventh aspect, the method of the sixth aspect has a second eluent holding step of holding, in a second holding flow path, a third eluent that is different than the first and second eluents, wherein the eluting step further has a second flow path switching step switching the liquid feeding flow path from the first flow path to a third flow path that causes the first eluent to flow from the liquid feeding device to the adsorbing portion via the second holding flow path in which the third eluent is held in the second eluent holding step.

In the above-described liquid chromatography analysis method, by executing the first flow path switching step, the second eluent that was held in the first holding flow path is pushed-out toward the adsorbing portion. Then, after the first flow path switching step is executed, by switching the liquid feeding flow path to the third flow path in the second flow path switching step, the third eluent that was held in the second holding flow path is pushed-out toward the adsorbing portion by the first eluent that has flowed-in into the second holding flow path.

Here, by making the liquid feeding flow path, the first holding flow path and the second holding flow path be flow paths that are narrow to the extent that mixing-together of eluents does not occur, the second eluent that has been pushed-out from the first holding flow path, and the third eluent that has been pushed-out from the second holding flow path, are both fed to the adsorbing portion in a state of not being mixed together with the first eluent.

In a liquid chromatography analysis method of an eighth aspect, the method of any one of the fifth through seventh aspects has a specimen holding step of holding a specimen in a specimen holding flow path, wherein the eluting step has a specimen introducing step switching the liquid feeding flow path from the first flow path to a fourth flow path that causes the first eluent to flow to the adsorbing portion via the specimen holding flow path in which the specimen is held in the specimen holding step.

In the above-described liquid chromatography analysis method, by switching the liquid feeding flow path from the first flow path to the fourth flow path in the specimen introducing step, the specimen within the specimen holding flow path is pushed-out by the first eluent and is introduced into the adsorbing portion. After the specimen is introduced into the adsorbing portion, the first eluent passes through the specimen holding flow path and is introduced into the adsorbing portion, and eluting of analysis components is carried out.

A ninth aspect of the present invention relates to a liquid chromatography analysis program that is a program for, in a liquid chromatography apparatus that has an adsorbing portion that adsorbs analysis components within a specimen, a liquid feeding device that feeds a first eluent that elutes analysis components adsorbed at the adsorbing portion, a liquid feeding flow path that communicates the liquid feeding device and the adsorbing portion, an analyzing unit for analyzing analysis components eluted by the first eluent, and a computer that controls the liquid feeding device and the analyzing unit, causing the computer to execute processing steps including: an eluting step of feeding, to the adsorbing portion that adsorbs analysis components in a specimen, a first eluent that elutes the analysis components, in an amount greater than or equal to an amount needed for analysis of one specimen from a cylinder portion by a one-time pushing operation of a rod of the liquid feeding device, and eluting the analysis components; and an analyzing step of analyzing, at the analyzing unit, the analysis components eluted in the eluting step.

In the above-described liquid chromatography analysis program, the liquid feeding device is controlled by the computer such that, in the eluting step, the first eluent is fed in an amount that is greater than or equal to the amount needed for the analysis of one specimen, from the cylinder portion by the pushing operation of one time. Accordingly, because the pushing operation is not carried out repeatedly during the analysis of one specimen, the occurrence of pulsation, that accompanies repeating of the pushing and pulling operations, can be effectively suppressed. Therefore, in the liquid chromatography apparatus, a damper for suppressing pulsation can be omitted, and costs are reduced. Further, because the eluent flows through the liquid feeding flow path at a constant pressure and flow rate, deterioration in accuracy that accompanies fluctuations in pressure and flow rate of the eluent is suppressed in the analyzing step.

As described above, in accordance with the present invention, because pulsation of an eluent, that is fed during the analysis of one specimen, is suppressed, a damper can be omitted, and the manufacturing cost of the liquid chromatography apparatus is reduced.

### BRIEF DESCRIPTION OF THE DRAWINGS

Certain preferred embodiments of the invention will now be described by way of example and with reference to the accompanying drawings, in which:

Fig. 1 is a perspective view showing the exterior of a liquid chromatography apparatus relating to a first embodiment;
Fig. 2 is a piping diagram showing the internal structure of the liquid chromatography apparatus of the first embodiment;
Fig. 3 is a piping diagram showing a state in which a specimen valve is switched such that a specimen within a specimen holding loop is fed to a column in the liquid chromatography apparatus of the first embodiment;
Fig. 4 is a piping diagram showing a state in which a second switching valve is switched such that eluent C within an eluent holding loop is fed to the column, in the liquid chromatography apparatus of the first embodiment;
Fig. 5 is a piping diagram showing a state in which a first switching valve is switched such that eluent B within an eluent holding loop is fed to the column, in the liquid chromatography apparatus of the first embodiment;
Fig. 6 is an exploded perspective view viewing, obliquely and from below, the first switching valve, the second switching valve and the specimen valve;
Fig. 7A is an explanatory drawing showing a state in which, at the first switching valve, the second switching valve and the specimen valve, a first eluent holding loop, a second eluent holding loop and a specimen holding loop are cut-off from a liquid feeding flow path, and Fig. 7B is an explanatory drawing showing a state in which, at the first switching valve, the second switching valve and the specimen valve, the first eluent holding loop, the second eluent holding loop and the specimen holding loop communicate with the liquid feeding flow path;
Fig. 8 is a block drawing showing the relationship between a main pump, a specimen preparing unit, the specimen valve, the first switching valve, the second switching valve and a photometric unit of the liquid chromatography apparatus of the first embodiment, and a computer that controls them;
Fig. 9 is a flowchart showing processes of analyzing a blood sample in the liquid chromatography apparatus of the first embodiment;
Fig. 10 is a schematic drawing showing an example of a chromatogram measured by the photometric unit at the time of feeding eluents to the column in the order of A, C, B; and
Fig. 11A is an explanatory drawing showing changes over time in a feeding flow rate of eluent C to the column in the liquid chromatography apparatus of the first embodiment, and
Fig. 11B is an explanatory drawing showing changes over time t of a feeding flow rate v of eluent C to a column in a conventional liquid chromatography apparatus.

### DETAILED DESCRIPTION OF THE INVENTION

### 1. First Embodiment

An example of a liquid chromatography apparatus is described in detail hereinafter by using the drawings.

### <Constitution>

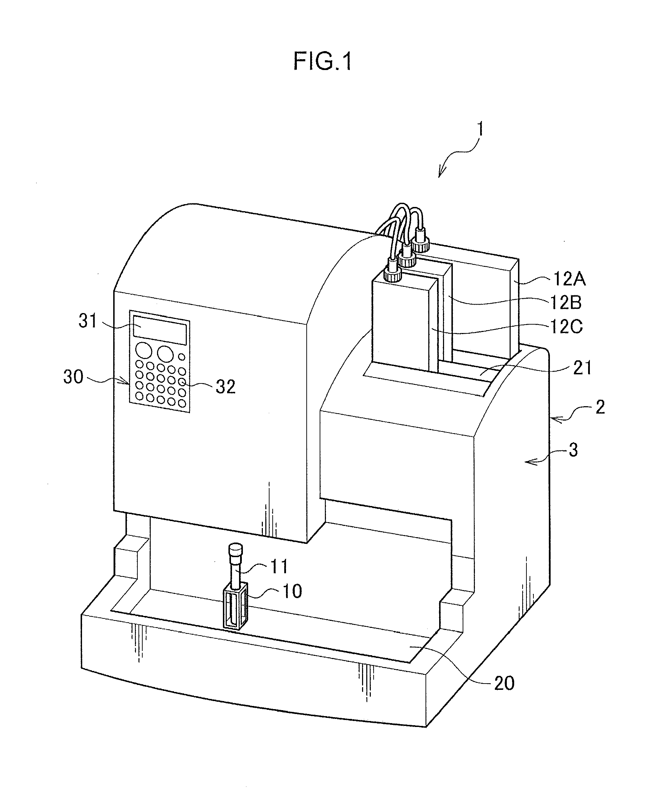

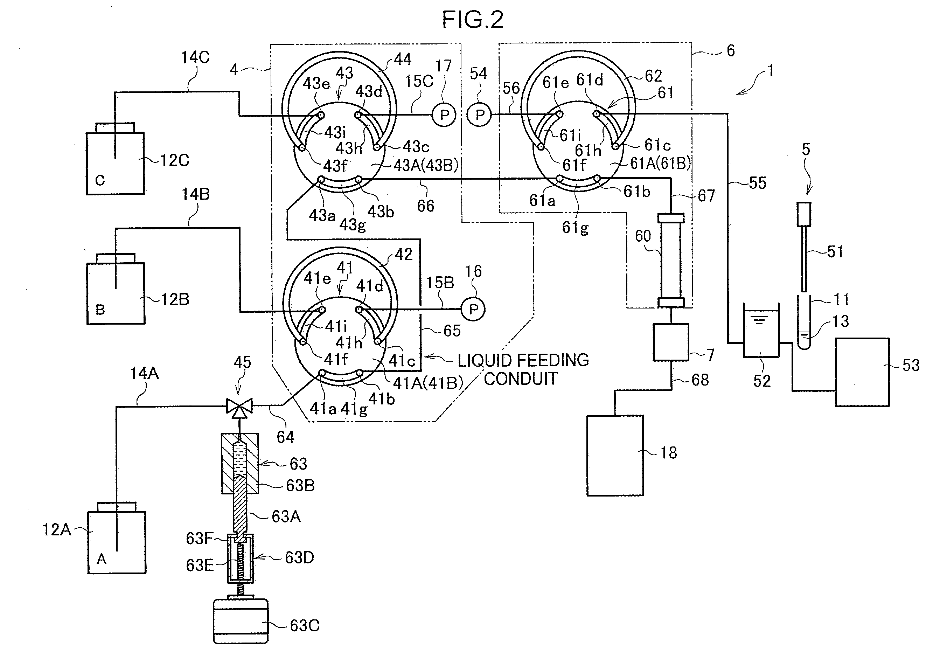

As shown in Fig. 1 and Fig. 2, a liquid chromatography apparatus 1 relating to a first embodiment has a device main body 2 and a housing 3. A table 20 and a holder portion 21 are formed at the device main body 2. A blood collection tube 11 that is held in a rack 10 is set on the table 20. Set at the holder portion 21 are an eluent pack 12A in which eluent A that serves as a first eluent is accommodated, an eluent pack 12B in which eluent B that serves as a second eluent is accommodated, an eluent pack 12C in which eluent C that serves as a third eluent is accommodated. An eluent switching unit 4, a specimen preparing unit 5, a separation/adsorption unit 6, and a photometric unit 7 that are described later are incorporated in the housing 3. An operation panel 30 having plural operation buttons 32, and a display panel 31, are provided at the front surface of the housing 3. Here, the present embodiment is structured so as to carry out the analysis of the one blood collection tube 11 by measurement of one time. However, the present invention is not limited to the above mentioned constitution, and may be constituted so as to carry out measurement continuously by using a rack that can hold plural blood collection tubes 11.

As shown in Fig. 2, the liquid chromatography apparatus 1 has: the specimen preparing unit 5 that prepares a specimen from a blood sample 13 within the blood collection tube 11; the separation/adsorption unit 6 that adsorbs and elutes analysis components of the specimen that was prepared at the specimen preparing unit 5; the photometric unit 7 that serves as an analyzing unit that optically analyzes the analysis components that were eluted at the separation/adsorption unit 6; and the eluent switching unit 4 that supplies eluent B and eluent C to the separation/adsorption unit 6.

The specimen preparing unit 5 has a sample suction nozzle 51 that sucks the blood sample 13 that is within the blood collection tube 11, and a dilution tank 52 that prepares the specimen. The blood sample is fed from the specimen preparing unit 5 via a specimen valve 61 to a column 60 at an appropriate timing.

The separation/adsorption unit 6 has: the column 60 that serves as an adsorbing portion that adsorbs analysis components, such as glycohemoglobin A1c or the like, that are within the specimen that was prepared at the specimen preparing unit 5; a main pump 63 that serves as a liquid feeding device that feeds eluent A toward the column 60; a liquid feeding flow path that communicates the main pump 63 and the column 60; and the specimen valve 61 that is for injecting the specimen into the liquid feeding flow path.

As shown in Fig. 2, the liquid feeding flow path is structured by: a conduit 64 that communicates the main pump 63 and a first switching valve 41; a conduit 65 that communicates the first switching valve 41 and a second switching valve 43; a conduit 66 that communicates the second switching valve 43 and the specimen valve 61; and a conduit 67 that communicates the specimen valve 61 and the column 60. Note that one end of a conduit 68 is connected to the exit side of the column 60, and the photometric unit 7 is provided on the conduit 68. The other end of the conduit 68 is connected to a waste liquid tank 18.

Further, a three-way valve 45 is provided between the conduit 64 and the main pump 63. The eluent pack 12A is connected to the three-way valve 45 via a conduit 14A.

As shown in Fig. 2 through Fig. 5, the main pump 63 is a plunger pump having a cylinder 63B (cylinder portion), a plunger 63A (rod) that moves reciprocally within the cylinder 63B, a ball screw 63D that moves the plunger 63A reciprocally, and a stepping motor 63C that rotates a screw shaft 63E of the ball screw 63D. The ball screw 63D has the aforementioned screw shaft 63E, and a nut 63F that is screwed-together with the screw shaft 63E and is fixed to the final end of the plunger 63A.

As shown in Fig. 2 through Fig. 5, when the screw shaft 63E rotates in the clockwise direction for example due to the stepping motor 63C, the nut 63F moves in the direction of moving away from the stepping motor 63C, and the plunger 63A is pushed-out toward the cylinder 63B. Conversely, when the ball screw 63D rotates in the counterclockwise direction, the nut 63F moves in the direction of approaching the stepping motor 63C, and the plunger 63A is pulled-down from the cylinder 63B.

In the present embodiment, the main pump 63 has a capacity such that eluent A, in an amount that is sufficient to carry out the series of analyzing operations for one specimen that includes measurement starting processing (equilibration of the column 60), fractionation of the specimen (eluting, by an eluent, the analysis components adsorbed at the column 60), measurement processing, washing of the column 60, and post-measurement processing (equilibration of the column 60), is pulled into the cylinder 63B by one pulling operation of the plunger 63A, and eluent of an amount such that one specimen can be analyzed can be fed from the cylinder 63B by one pushing operation, i.e., in one stroke. Here, from the standpoints of avoiding the problem of the pulsation of the pump adversely affecting the measurement accuracy in a conventional device and to ensure the needed accuracy without using a damper, it suffices for the amount of eluent A that the main pump feeds to be, for one sample, at least a sufficient amount to carry out the fractionation of the specimen and the measurement processing. Namely, the amount of eluent A that is fed by the main pump may be an amount that is sufficient to carry out fractionation of the specimen and the measuring processing, or may be an amount that is the sum of the amount that is sufficient to carry out fractionation of the specimen and the measuring processing and the amount that is needed in order to carry out at least one processing among the measurement starting processing, washing of the column 60, and the post-measurement processing. Namely, in the present invention, the amount that is needed for analysis of one specimen is an amount that is sufficient to carry out, for example, at least fractionation of the specimen and the measurement processing. Or, the amount that is needed for analysis of one specimen may be, for example, an amount that is the sum of the amount that is sufficient to carry out fractionation of the specimen and the measurement processing and the amount that is needed to carry out at least one processing among the measurement starting processing, washing of the column 60, and the post-measurement processing.

Note that the feeding pressure of eluent A at the time of one stroke by the main pump 63 is preferably 0.1 MPa, or may be 0.15 MPa through 7.5 MPa, or may be 0.2 MPa through 5 MPa, or further, may be 0.5 MPa through 3 MPa.

Further, the amount of eluent A that is fed at the time of one stroke of the main pump 63 can be made to differ in accordance with whether continuous measurement of plural specimens is carried out or single measurement of a single specimen is carried out. Namely, given that the fed amount at the time of one stroke in the case of a single measurement is 1, in continuous measurement, the main pump 63 can be operated such that a final proportion of the fed amount (= 1) at the time of one stroke in the case of a single measurement is not fed and is maintained as is, and operation of the main pump 63 moves on to the pulling operation for the next measurement. Here, the fed amount of eluent A by the main pump 63 is preferably 0.5 ml to 10 ml per one measurement, and may be 1 ml to 8 ml per one measurement, or may be 1 ml to 6 ml per one measurement.

In accordance with the measuring device of the present first embodiment, as the measurement time required until data output is completed through the series of process that are equilibration of the column → specimen fractionation → measuring processing → column washing → post-measurement processing, 38 seconds to 10 minutes can be realized, or 38 seconds to 7 minutes can be realized, or 38 seconds to 6 minutes can be realized.

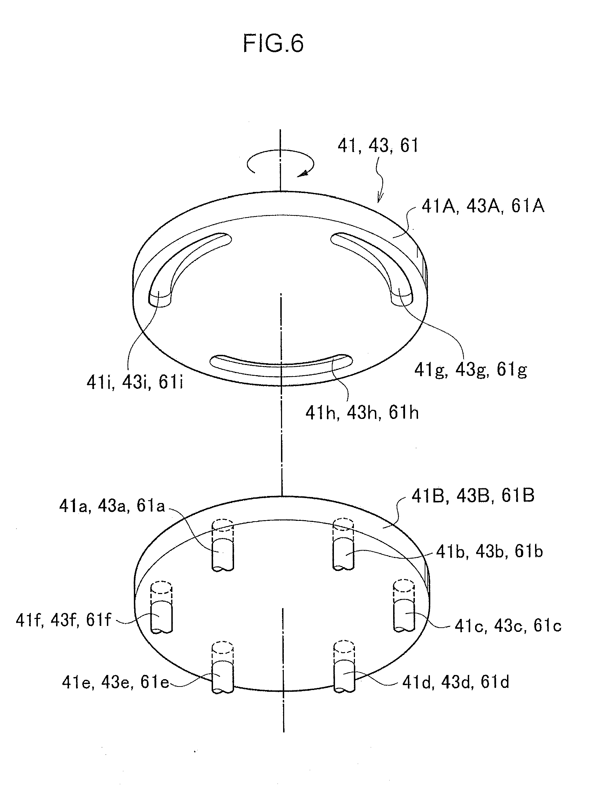

The specimen valve 61 that serves as a third switching means is a six-way valve. As shown in Fig. 2, Fig. 6 and Fig. 7A, the specimen valve 61 has a main body 61B that is circular plate shaped and in which are formed ports 61a, 61b, 61c, 61d, 61e, 61f that are arrayed in the counterclockwise direction at uniform intervals of 60°, and a valve body 61A that is circular plate shaped and has the same diameter as the main body 61B and is disposed concentrically with and so as to be able to rotate with respect to the main body 61B. As shown in Fig. 6, three flow paths 61g, 61h, 61i, that are circular arc shaped and are of sizes that communicate two adjacent ports among the ports 61a through 61f, are formed at uniform intervals of 60° in the surface of the valve body 61A at the side that faces the main body 61B.

The port 61c and the port 61f, that oppose one another across the central point at the main body 61B, are communicated by a specimen holding loop 62 that serves as a specimen holding flow path. Further, the port 61a is communicated with a conduit 66 that structures a portion of the liquid feeding flow path, and the port 61b is communicated with the conduit 67 that structures another portion of the liquid feeding flow path. On the other hand, the port 61d communicates via a conduit 55 with the dilution tank 52 at the specimen preparing unit 5, and the port 61e communicates with a pump 54 via a conduit 56.

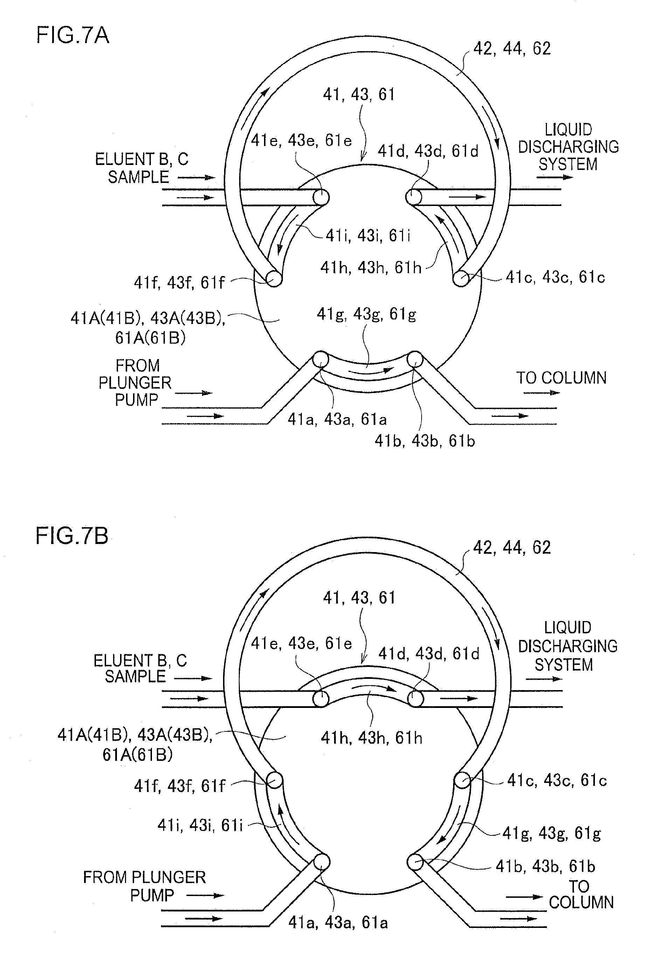

At the specimen valve 61, when a specimen is not being injected into the column 60, as shown in Fig. 2 and Fig. 7A, the valve body 61A is in a positional relationship with respect to the main body 61B such that the port 61a and the port 61b, and the port 61c and the port 61d, and the port 61e and the port 61f are communicated by the flow path 61g, the flow path 61h and the flow path 61i, respectively. Therefore, the conduit 66 and the conduit 67 are communicated by the flow path 61g, but the specimen holding loop 62 is in a state of being cut-off from the liquid feeding flow path. Accordingly, the liquid feeding flow path structures a first flow path that does not communicate with the specimen holding loop 62.

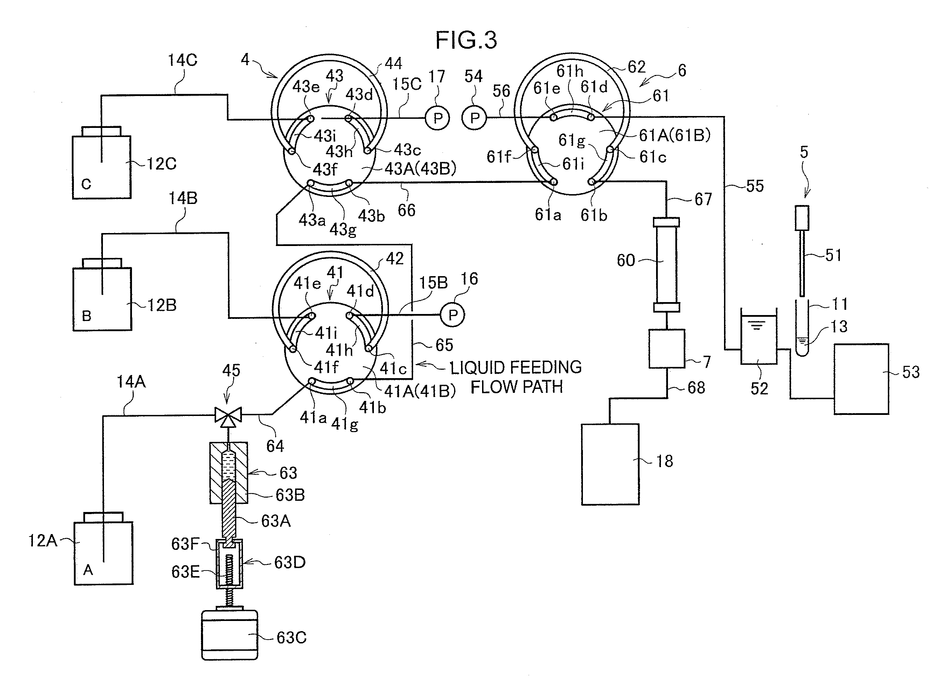

On the other hand, at a time when injecting a specimen into the column 60, as shown in Fig. 3 through Fig. 5 and Fig. 7B, the valve body 61A rotates 60° in the counterclockwise direction from the state shown in Fig. 2 with respect to the main body 61B, and the port 61b and the port 61c are communicated by the flow path 61g, and the port 61d and the port 61e are communicated by the flow path 61h, and the port 61f and the port 61a are communicated by the flow path 61i. Due thereto, the conduit 66 and the conduit 67 communicate with the specimen holding loop 62 via the flow path 61i and the flow path 61g, respectively. Due thereto, the liquid feeding flow path structures a fourth flow path that communicates with the specimen holding loop 62.

As shown in Fig. 2, the eluent switching unit 4 has the first switching valve 41 that serves as a first switching means, and the second switching valve 43 that serves as a second switching means.

The first switching valve 41 is a six-way valve. As shown in Fig. 2, Fig. 6 and Fig. 7A, the first switching valve 41 has a main body 41B in which are formed ports 41a, 41b, 41c, 41d, 41e, 41f that are arrayed in the counterclockwise direction at uniform intervals of 60°, and a valve body 41A that is circular plate shaped and has the same diameter as the main body 41B and is disposed concentrically with and so as to be able to rotate with respect to the main body 41B. As shown in Fig. 6, three flow paths 41g, 41h, 41i, that are circular arc shaped and are of sizes that communicate two adjacent ports among the ports 41a through 41f, are formed at uniform intervals of 60° in the surface of the valve body 41A at the side that faces the main body 41B.

The port 41c and the port 41f, that oppose one another across the central point at the main body 41B, are communicated by a first eluent holding loop 42 that serves as a first holding flow path. The port 41a is communicated with the conduit 64 that structures a portion of the liquid feeding flow path, and the port 41b is communicated with the conduit 65 that structures another portion of the liquid feeding flow path. On the other hand, the port 41d communicates via a conduit 15B with a pump 16, and the port 41e communicates with the eluent pack 12B via a conduit 14B.

At the first switching valve 41, when eluent B is not being injected into the column 60, as shown in Fig. 2 through Fig. 4 and Fig. 7A, the valve body 41A is in a positional relationship with respect to the main body 41B such that the port 41a and the port 41b, and the port 41c and the port 41d, and the port 41e and the port 41f are communicated by the flow path 41g, the flow path 41h and the flow path 41i, respectively. Therefore, the conduit 64 and the conduit 65 are communicated by the flow path 41g, but the first eluent holding loop 42 is in a state of being cut-off from the liquid feeding flow path. Accordingly, the liquid feeding flow path structures the first flow path that does not communicate with the first eluent holding loop 42.

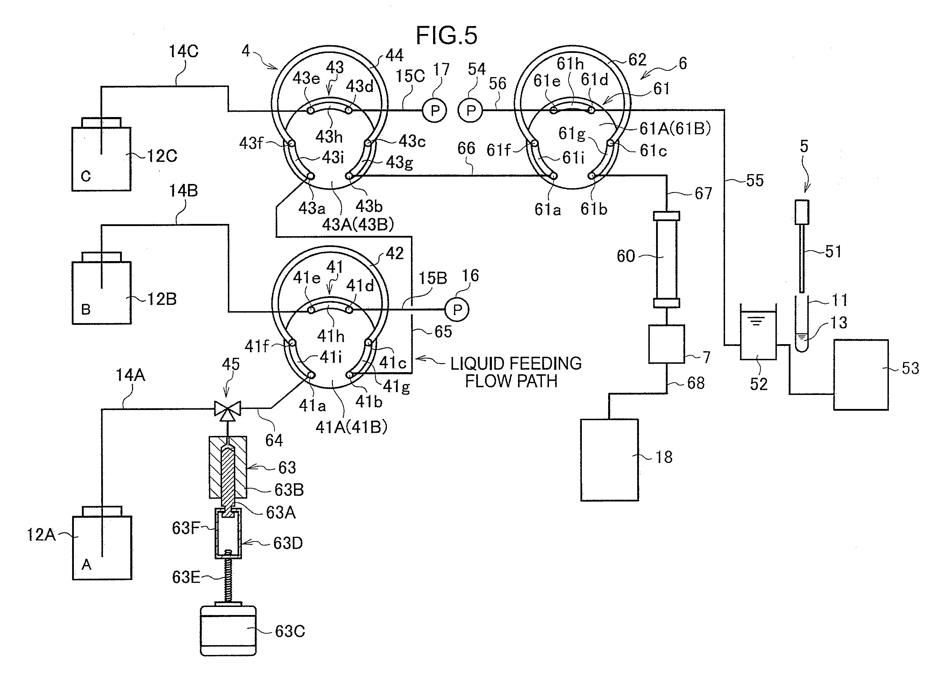

On the other hand, at a time when injecting eluent B into the column 60, as shown in Fig. 5 and Fig. 7B, the valve body 41A rotates 60° in the counterclockwise direction from the state shown in Fig. 2 with respect to the main body 41B, and the port 41b and the port 41c are communicated by the flow path 41g, and the port 41d and the port 41e are communicated by the flow path 41h, and the port 41f and the port 41a are communicated by the flow path 41i. Due thereto, the conduit 64 and the conduit 65 communicate with the first eluent holding loop 42 via the flow path 41i and the flow path 41g, respectively. Due thereto, the liquid feeding flow path structures a second flow path that communicates with the first eluent holding loop 42.

Similarly, the second switching valve 43 is also a six-way valve. As shown in Fig. 2, Fig. 6 and Fig. 7A, the second switching valve 43 has a main body 43B in which are formed ports 43a, 43b, 43c, 43d, 43e, 43f that are arrayed in the counterclockwise direction at uniform intervals of 60°, and a valve body 43A that is circular plate shaped and has the same diameter as the main body 43B and is disposed concentrically with and so as to be able to rotate with respect to the main body 43B. As shown in Fig. 6, three flow paths 43g, 43h, 43i, that are circular arc shaped and are of sizes that communicate two adjacent ports among the ports 43a through 43f, are formed at uniform intervals of 60° in the surface of the valve body 43A at the side that faces the main body 43B.

The port 43c and the port 43f, that oppose one another across the central point at the main body 43B, are communicated by a second eluent holding loop 44 that serves as a second holding flow path. The port 43a is communicated with the conduit 65 that structures a portion of the liquid feeding flow path, and the port 43b is communicated with the conduit 66 that structures another portion of the liquid feeding flow path. On the other hand, the port 43d communicates via a conduit 15C with a pump 17, and the port 43e communicates with the eluent pack 12C via a conduit 14C.

At the second switching valve 43, when eluent C is not being injected into the column 60, as shown in Fig. 2, Fig. 3 and Fig. 7A, the valve body 43A is in a positional relationship with respect to the main body 43B such that the port 43a and the port 43b, and the port 43c and the port 43d, and the port 43e and the port 43f are communicated by the flow path 43g, the flow path 43h and the flow path 43i, respectively. Therefore, the conduit 65 and the conduit 66 are communicated by the flow path 43g, but the second eluent holding loop 44 is in a state of being cut-off from the liquid feeding flow path. The liquid feeding flow path structures the first flow path that does not communicate with the second eluent holding loop 44.

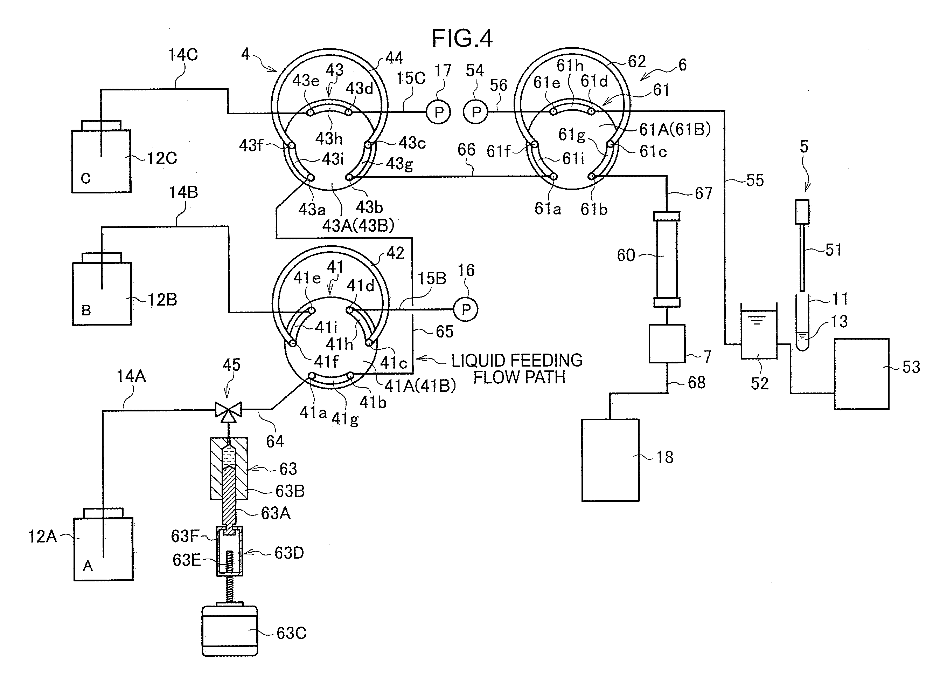

On the other hand, at a time when injecting eluent C into the column 60, as shown in Fig. 4, Fig. 5 and Fig. 7B, the valve body 43A rotates 60° in the counterclockwise direction from the state shown in Fig. 2 with respect to the main body 43B, and the port 43b and the port 43c are communicated by the flow path 43g, and the port 43d and the port 43e are communicated by the flow path 43h, and the port 43f and the port 43a are communicated by the flow path 43i. Due thereto, the conduit 65 and the conduit 66 communicate with the second eluent holding loop 44 via the flow path 43i and the flow path 43g, respectively. Due thereto, the liquid feeding flow path structures a third flow path that communicates with the second eluent holding loop 44.

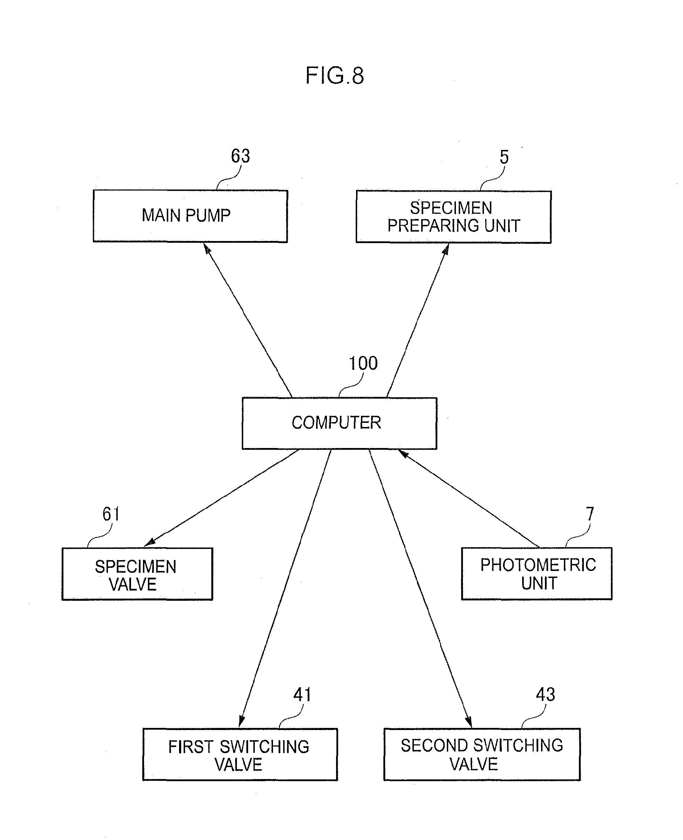

Note that, in the liquid chromatography apparatus 1, as shown in Fig. 8, the main pump 63, the specimen pump 61, the first switching valve 41, the second switching valve 43 and the specimen preparing unit 5 are controlled by a computer 100, and the results of measurement at the photometric unit 7 are inputted to the computer 100.

### <Operation>

Operation of the liquid chromatography apparatus 1 is described hereinafter.
At the time of starting measurement, as shown in Fig. 2 and Fig. 7A, at all of the first switching valve 41, the second switching valve 43 and the specimen valve 61, the valve bodies 41A, 43A, 61A are in positional relationships with respect to the main bodies 41B, 43B, 61B such that the conduits 64 through 67 communicate and structure the liquid feeding flow path, but all of the first eluent holding loop 42, the second eluent holding loop 44, and the specimen holding loop 62 are cut-off from the liquid feeding flow path.

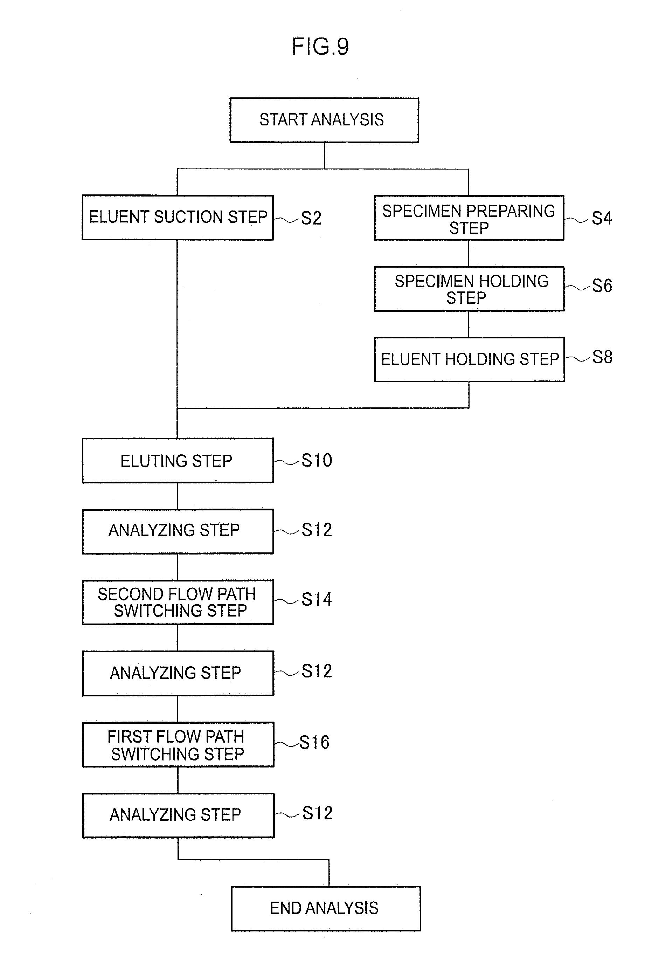

In this state, as shown in Fig. 9, eluent sucking step S2 is carried out. The three-way valve 45 is switched such that the conduit 14A and the main pump 63 communicate, and, at the main pump 63, the plunger 63A is pulled-down with respect to the cylinder 63B, and eluent A, of an amount that is sufficient to carry out the series of analyzing operations that is formed from measurement starting processing, fractionation of the specimen, measuring processing, washing of the column 60 and post-measurement processing, is sucked from the eluent pack 12A into the cylinder 63B. Here, as described above, from the standpoints of avoiding the problem of the pulsation of the pump adversely affecting the measurement accuracy in a conventional device and to ensure the needed accuracy without using a damper, it suffices for the amount of eluent A that the main pump feeds to be an amount that is sufficient to carry out at least fractionation of the specimen and the measurement processing for one specimen. Namely, the amount of eluent A that the main pump feeds may be an amount that is sufficient to carry out fractionation of the specimen and the measuring processing, or may be an amount that is the sum of the amount that is sufficient to carry out fractionation of the specimen and the measuring processing and the amount that is needed in order to carry out at least one processing among measurement starting processing, washing of the column 60, and post-measurement processing.

Simultaneously, at the specimen preparing unit 5, specimen preparing step S4 is carried out, and the blood sample 13 is prepared as a specimen at the dilution tank 52.

After the specimen has been prepared, specimen holding step S6 is carried out, and the solution at the interiors of the conduit 55, the specimen holding loop 62 and the conduit 56 is sucked by the pump 54. Due thereto, the specimen holding loop 62 is filled with the specimen that is within the dilution tank 52.

Next, eluent holding step S8 is carried out, and the solution at the interiors of the conduit 14B, the first eluent holding loop 42 and the conduit 15B is sucked by the pump 16, and the first eluent holding loop 42 is filled with eluent B.

Then, the solution at the interiors of the conduit 14C, the second eluent holding loop 44 and the conduit 15C is sucked by the pump 17, and the second eluent holding loop 44 is filled with eluent C.

After the specimen holding loop 62, the first eluent holding loop 42 and the second eluent holding loop 44 have been filled with the specimen, eluent B and eluent C respectively, the three-way valve 45 is switched so that the main pump 63 and the conduit 64 are communicated, and then, the plunger 63A is pushed-out into the cylinder 63B at a constant speed, and feeding of eluent A starts. Eluent A that is fed-out from the main pump 63 is fed to the column 60 via the conduit 64, the conduit 65, the conduit 66 and the conduit 67, and the column 60 is equilibrated.

After the column 60 is equilibrated, eluting step S10 is carried out in accordance with the following procedure. First, as shown in Fig. 3 and Fig. 7B, at the specimen valve 61, the valve body 61A is rotated counterclockwise in 60° from the position shown in Fig. 2 and Fig. 7A with respect to the main body 61B, and, at the specimen valve 61, the liquid feeding flow path is switched from the first flow path, that does not communicate with the specimen holding loop 62, to the fourth flow path that communicates with the specimen holding loop 62 via the conduit 66 and the conduit 67. Here, the inner diameters of the conduit 66 and the specimen holding loop 62 and the conduit 67 are narrow to the extent that plural types of liquids pass through without mixing together. Therefore, the specimen, that was held at the interior of the specimen holding loop 62, hardly mixes together at all with eluent A that has passed through the conduit 66 and come-in, and is pushed-out by eluent A toward the conduit 67, and is fed to the column 60. At the column 60, the analysis components within the specimen are adsorbed.

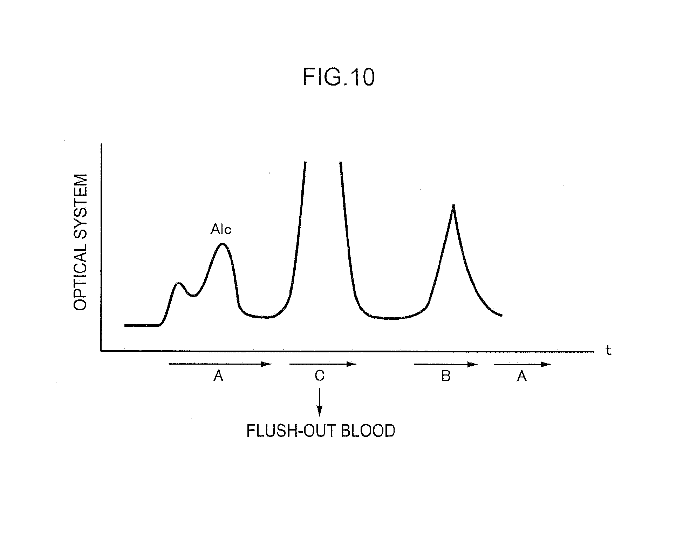

After the specimen that was held within the specimen holding loop 62 is pushed-out toward the column 60, eluent A is fed through the specimen holding loop 62 to the column 60. Due thereto, as shown in Fig. 10, the analysis components that were adsorbed at the column 60 are eluted by eluent A. Further, simultaneously with the eluting step S10, analyzing step S12 is carried out, and the analysis components that are eluted by eluent A are detected at the photometric unit 7.

After eluting of the analysis components by eluent A is finished, second flow path switching step S14 is carried out. Namely, as shown in Fig. 4 and Fig. 7B, at the second switching valve 43, the valve body 43A is rotated 60° counterclockwise from the position shown in Fig. 2 and Fig. 7A with respect to the main body 43B, and, at the second switching valve 43, the liquid feeding flow path is switched from the first flow path, that does not communicate with the second eluent holding loop 44, to the third flow path that communicates with the second eluent holding loop 44 via the conduit 65 and the conduit 66. Here, the inner diameter of the conduit 66 also is narrow to the extent that plural types of liquids pass through without mixing together as described above. Therefore, eluent C, that was held in the second eluent holding loop 44, is fed to the column 60 via the conduit 66, the specimen holding loop 62 and the conduit 67, without mixing-together with eluent A.

As shown in Fig. 10, when eluent C is fed to the column 60, among the analysis components that were adsorbed at the column 60, the analysis components that were not eluted by eluent A are eluted by eluent C, and are detected at the photometric unit 7.

When eluting of analysis components by eluent C has ended, first flow path switching step S16 is carried out. As shown in Fig. 5 and Fig. 7B, at the first switching valve 41, the valve body 41A is rotated counterclockwise in 60°from the position shown in Fig. 2 and Fig. 7A with respect to the main body 41B, and, at the first switching valve 41, the liquid feeding flow path is switched from the first flow path, that does not communicate with the first eluent holding loop 42, to the second flow path that communicates with the first eluent holding loop 42 via the conduit 64 and the conduit 65. Here, the inner diameter of the conduit 65 also is narrow to the extent that plural types of liquids pass through without mixing together as described above. Therefore, eluent B, that was held in the first eluent holding loop 42, is fed to the column 60 via the conduit 65, the conduit 66, the specimen holding loop 62 and the conduit 67, without mixing-together with eluent A.

As shown in Fig. 10, when eluent B is fed to the column 60, among the analysis components that were adsorbed at the column 60, the analysis components that were not eluted by eluent A and eluent C are eluted by eluent B, and are detected at the photometric unit 7. Note that, if the analysis components that were eluted by eluent C and eluent B are not objects of measurement, the eluting by eluent C and eluent B corresponds to washing of the column 60.

After eluting the analysis components by eluent B is finished, feeding of eluent A continues while the specimen valve 61, the first switching valve 41 and the second switching valve 43 are maintained at the positions shown in Fig. 5 and Fig. 7B. Due thereto, post-measurement processing (equilibration of the column 60 after washing) is carried out.

### <Liquid Chromatography Analysis Program>

A liquid chromatography analysis program, that is for causing the computer 100 to execute process including the eluent sucking step S2, the specimen preparing step S4, the specimen holding step S6, the eluent holding step S8, the eluting step S10, the analyzing step S12, the second flow path switching step S14 and the first flow path switching step S16 that were described in the "Operation" section, is installed in the computer 100. Note that the eluent holding step S8 includes a first eluent holding step that fills the first eluent holding loop 42 with eluent B, and a second eluent holding step that fills the second eluent holding loop 44 with eluent C. Further, the above-described liquid chromatography analysis program may be a program that first executes either of the first eluent holding step or the second eluent holding step.

The liquid chromatography analysis program that is installed in the computer 100 may be a program that is simpler than the above-described liquid chromatography analysis program. Such a program may be, for example, a program in which the eluent holding step S8 does not include the first eluent holding step, and the first flow path switching step S16 is not executed, or a program in which the eluent holding step S8 does not include the second eluent holding step, and the second flow path switching step S14 is not executed, or the like. Further, the above-described liquid chromatography analysis program may be a program in which the specimen preparing step S4 and the specimen holding step S6 are omitted. Moreover, the above-described liquid chromatography analysis program may be a program that causes the computer 100 to execute process including the eluting step S10 and the analyzing step S12. Note that the computer 100 has a control unit. This control unit is structured to include a CPU that controls the device overall, a ROM that stores programs and the like, a RAM that temporarily stores the results of measurement, and an input/output port, and can control the liquid chromatography apparatus 1 on the basis of commands inputted from operation buttons or a keyboard for example.

In the liquid chromatography apparatus 1 of the first embodiment, at the main pump 63, after eluent A is sucked by the cylinder 63B in an amount that is greater than or equal to the amount that is needed in order to execute the series of analyzing operations needed to analyze one specimen, the plunger 63A is pushed-out into the cylinder 63B at a constant speed and liquid feeding continues, until the above-described series of analyzing operations is completely finished. Accordingly, from the start of the above-described series of analyzing operations until the series of analyzing operations has completely ended, eluent A is fed to the column 60 at a constant pressure and flow rate, and therefore, the occurrence of pulsation, that is caused by the plunger repeating the pulling operation and pushing operation, can be suppressed. Accordingly, a damper for eliminating pulsation of the eluent flow is not needed. Further, because the eluent that has passed through the column 60 passes through the photometric unit 7 at a substantially constant pressure and constant flow rate, the occurrence of errors in measurement, that are caused by fluctuations in the pressure and flow rate of the eluent, can be suppressed.

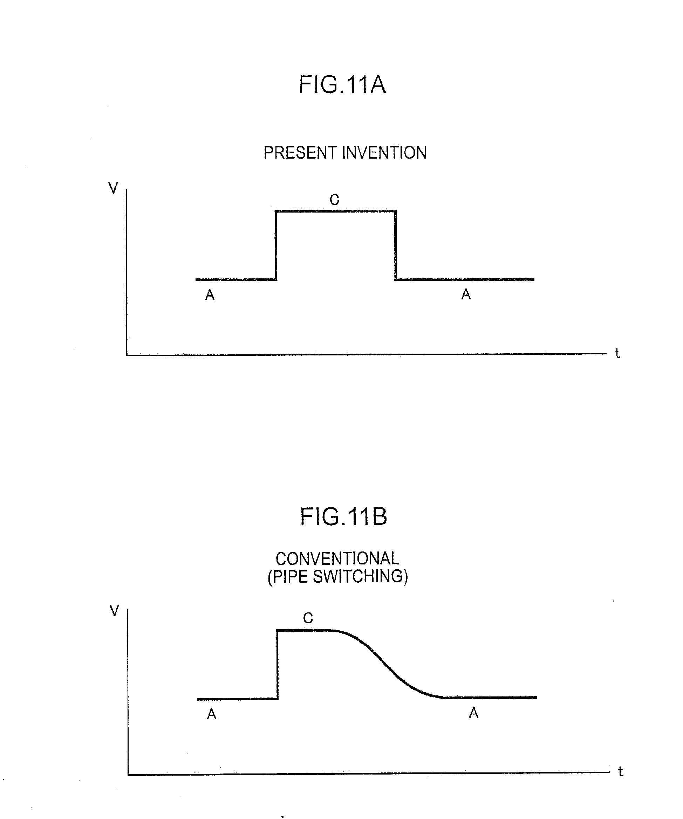

Further, the liquid chromatography apparatus 1 is structured such that the first eluent holding loop 42 and the second eluent holding loop 44 are successively communicated with the liquid feeding flow path by switching the flow path at the first switching valve 41 and the second switching valve 43. Due thereto, when the second eluent holding loop 44 is made to communicate with the liquid feeding flow path, eluent C that is held in the second eluent holding loop 44 is pushed-out and fed to the column 60 substantially without mixing together with eluent A. Further, the same is true also when the first eluent holding loop 42 is communicated with the liquid feeding flow path and eluent B is fed. In contrast, in a liquid chromatography apparatus of a conventional form in which switching of the eluent is carried out by successively switching, by a switching valve or the like, the pipe that leads to the column from the pack in which eluent A is accommodated, the pack in which eluent B is accommodated, and the pack in which eluent C is accommodated, and liquid feeding is carried out by reciprocal operation of a pump, as shown in Fig. 11B, initially, eluent C is fed at a constant flow rate, but, as the feeding progresses, the flow rate of eluent C decreases. Concretely, in a liquid chromatography apparatus of a conventional form, at the time of the pushing operation of the pump, the internal pressure of the pump is constant, but, at the time of the pulling operation, the internal pressure of the pump becomes negative, and therefore, the amount of the eluent that is fed fluctuates. Namely, in the device of the conventional form, a damper is used in order to solve this problem. However, in accordance with the structure of the present invention, such a problem does not arise, and therefore, a damper is not needed.

Note that, depending on the compositions of eluent B and eluent C, the liquid chromatography apparatus 1 can be constituted so that, conversely, the first switching valve 41 is switched and eluent B is fed to the column 60, and thereafter, the second valve 43 is switched and eluent C is fed to the column 60. Further, in light of the principles of chromatographic measurement, for the series of analyzing operations that are executed for one specimen, there are cases in which the individual processings that are included in this series of analyzing operations cannot be clearly separated from the previous processing and the process thereafter. Namely, for example, in a case in which the liquid that is used at the end of the measurement processing and the liquid that is used in the washing of the column 60 are the same, a line cannot be drawn for indicating up to what point the measurement process proceeds. The can be applied to the other process as well. Namely, for such reasons, the present embodiment is not limited to the above-described aspect of the analyzing operations.

Moreover, the chromatography apparatus 1 of the first embodiment is structured such that the specimen preparing unit 5, the photometric unit 7, and the separation/adsorption unit 6 are accommodated within the single housing 3. However, the specimen preparing unit, the photometric unit, the eluent feeding unit, and the separation/adsorption unit may be structured as respectively separate bodies, and the chromatography apparatus may be a system in which these units are connected.

## Claims

1. A liquid chromatography apparatus comprising:
an adsorbing portion that adsorbs analysis components within a specimen;
a liquid feeding device that feeds a first eluent, that elutes analysis components adsorbed at the adsorbing portion, in an amount greater than or equal to an amount needed for analysis of one specimen from a cylinder portion by a one-time pushing operation of a rod;
a liquid feeding flow path that communicates the liquid feeding device and the adsorbing portion; and
an analyzing unit for analyzing analysis components eluted by the first eluent.

2. The liquid chromatography apparatus of claim 1, further comprising:
a first holding flow path that holds a second eluent that is different than the first eluent; and
first switching means for switching the liquid feeding flow path to either of a first flow path, that causes the first eluent to flow from the liquid feeding device to the adsorbing portion, and a second flow path, that causes the first eluent to flow from the liquid feeding device through the first holding flow path to the adsorbing portion.

3. The liquid chromatography apparatus of claim 2, further comprising:
a second holding flow path that holds a third eluent that is different than the first and second eluents; and
second switching means for switching the liquid feeding flow path to either of the first flow path, and a third flow path that causes the first eluent to flow from the liquid feeding device through the second holding flow path to the adsorbing portion.

4. The liquid chromatography apparatus of any one of claims 1 through 3, further comprising:
a specimen holding flow path that holds a specimen; and
third switching means for switching the liquid feeding flow path to either of the first flow path, and a fourth flow path that causes the first eluent to flow from the liquid feeding device through the specimen holding flow path to the adsorbing portion.

5. A liquid chromatography analysis method comprising:
an eluting step of, at a liquid feeding device having a cylinder portion and a rod, feeding, to an adsorbing portion that adsorbs analysis components in a specimen, a first eluent that elutes the analysis components, in an amount greater than or equal to an amount needed for analysis of one specimen from the cylinder portion by a one-time pushing operation of the rod, and eluting the analysis components; and
an analyzing step of analyzing, at an analyzing unit, the analysis components eluted in the eluting step.

6. The liquid chromatography analysis method of claim 5, comprising:
a first eluent holding step of holding, in a first holding flow path, a second eluent that is different than the first eluent,
wherein the eluting step has a first flow path switching step that switches a liquid feeding flow path, that communicates the liquid feeding device and the adsorbing portion, from a first flow path, that causes the first eluent to flow from the liquid feeding device to the adsorbing portion, to a second flow path, that causes the first eluent to flow to the adsorbing portion via the first holding flow path in which the second eluent is held in the first eluent holding step.

7. The liquid chromatography analysis method of claim 6, comprising:
a second eluent holding step of holding, in a second holding flow path, a third eluent that is different than the first and second eluents,
wherein the eluting step further has a second flow path switching step that switches the liquid feeding flow path from the first flow path to a third flow path that causes the first eluent to flow to the adsorbing portion via the second holding flow path in which the third eluent is held in the second eluent holding step.

8. The liquid chromatography analysis method of any one of claims 5 through 7, comprising:
a specimen holding step of holding a specimen in a specimen holding flow path,
wherein the eluting step has a specimen introducing step that switches the liquid feeding flow path from the first flow path to a fourth flow path that causes the first eluent to flow to the adsorbing portion via the specimen holding flow path in which the specimen is held in the specimen holding step.

9. A liquid chromatography analysis program, wherein
in a liquid chromatography apparatus that has:
an adsorbing portion that adsorbs analysis components within a specimen,
a liquid feeding device that feeds a first eluent that elutes analysis components adsorbed at the adsorbing portion,
a liquid feeding flow path that communicates the liquid feeding device and the adsorbing portion,
an analyzing unit for analyzing analysis components eluted by the first eluent, and
a computer that controls the liquid feeding device and the analyzing unit,
the program causes the computer to execute processing steps comprising:
an eluting step of feeding, to the adsorbing portion that adsorbs analysis components in a specimen, a first eluent that elutes the analysis components, in an amount greater than or equal to an amount needed for analysis of one specimen from a cylinder portion by a one-time pushing operation of a rod of the liquid feeding device, and eluting the analysis components; and
an analyzing step of analyzing, at the analyzing unit, the analysis components eluted in the eluting step.
